# EUROPEAN PATENT APPLICATION

(11) **EP 4 684 946 A1**
(43) Date of publication of application: **28.01.2026**
(21) Application number: 24382801.9
(22) Date of filing: 23.07.2024
(51) Int. Cl.: B29C 70/38, B29D 99/00, B64C 1/06, B64C 1/00

(54) **METHOD FOR AUTOMATIC LAY-UP OF COMPOSITE MATERIAL FOR AIRCRAFT PANELS**

(71) Applicant: AIRBUS OPERATIONS, S.L.U., 28906 Getafe (Madrid) (ES)
(72) Inventor: REGUERO SIMON, Ana, 28906 GETAFE (Madrid) (ES); CANO CEDIEL, Jose David, 28906 GETAFE (Madrid) (ES); LOPEZ FERNANDEZ, Pablo, 28906 GETAFE (Madrid) (ES); MORA MENDIAS, Maria, 28906 GETAFE (Madrid) (ES)
(74) Representative: Herrero & Asociados, S.L.

(57) **Abstract**

A method (100) for manufacturing an aircraft panel that comprises a composite skin (240) with integrated components (220) (stringers/frames) having unsupported slots (220a), the method comprising obtaining (110) a male tool with the integrated component (220), laying up (120) the composite skin directly over the unsupported slots of the integrated component (220) with an automated fiber placement, AFP machine that provides tow deposition, wherein the integrated component (220) lack auxiliary support tools and adjusting (130) the force applied to the tow with the AFP machine during deposition over the unsupported slots to compensate the lack of auxiliary support tools.

## Description

### Object of the invention

The present invention refers to a method for the automatic lay-up of composite materials to obtain aircraft panels that comprise skin and integrated components, such as stringers or frames.

The present invention relates to the field of aerospace manufacturing, specifically to methods and apparatus for the automatic lay-up of composite material (carbon, glass, aramid, ceramic...) used in the production of composite skins for aircraft panels. The invention is particularly relevant to the production of large, complex composite structures in the aerospace industry, including both commercial and military aircraft.

### Background of the invention

In the field of aircraft production, the manufacturing of panels using composite materials has become increasingly prevalent due to their strength-to-weight ratio and other advantageous properties. Traditionally, the process of laying up carbon fiber material over integrated stringers in fuselage/wing/VTP/HTP (vertical tail plane, horizontal tail plane) panels involves several auxiliary operations. These operations include the use of reaction mandrels, caul plates, and tubular bags to support and react against the pressure applied by automated fiber placement (AFP) machines during the tow deposition process.

The conventional process requires the placement of a reaction mandrel inside a hollow stringer to compensate for the pressure applied by the AFP machine. This mandrel must be extracted before introducing the vacuum bag and preparing the part for the autoclave. Additionally, auxiliary mandrels may be required to ensure the correct positioning of the vacuum bag, adding complexity and time to the manufacturing process. These steps not only increase the lead time and recurrent costs but also necessitate precise coordination and handling, which can introduce variability and potential errors.

Given the competitive pressures in the aerospace industry to reduce production costs and increase efficiency, there is a significant demand for improved manufacturing methods that minimize auxiliary operations while maintaining or enhancing the quality of the final product. Innovations that can streamline the lay-up process and reduce the dependence on auxiliary tools and materials are highly desirable.

The present invention satisfies this demand.

### Description of the invention

The present invention relates to an advantageous method for automatic lay-up of composite material to obtain aircraft panels that comprises a composite skin with integrated components (such as stringers or frames). This method eliminates the requirement for reaction mandrels and other auxiliary supports.

Hence, a first aspect of the present invention relates to a method for manufacturing an aircraft panel that comprises a composite skin with at least one integrated component (i.e. stringer or frame) having an unsupported slot. The method comprises a first step of obtaining a male tool with the integrated component (e.g. an omega, delta, or semicircular stringer, or a frame) having an unsupported slot. The method comprises a second step of laying up the composite skin directly over the unsupported slot of the integrated component with an automated fiber placement, AFP, machine that provides tow deposition, wherein the integrated component lacks auxiliary support tools. Furthermore, the method comprises a third step of adjusting the force applied to the tow with the AFP machine during deposition over the unsupported slot to compensate the lack of auxiliary support tools.

In a preferred example, the step of adjusting the force applied to the tow comprises reducing a compaction pressure applied to the tow with the AFP machine while increasing the tow tension during deposition over the unsupported slot.

The key innovation lies in the ability to lay up the composite skin material directly over the unsupported slots of the integrated components (hollow stringers or frames) without internal support by optimizing (e.g. increasing) tow tension and controlling (e.g. reducing) the compaction pressure applied with the AFP machine rollers. The proposed method ensures accurate tow placement and adhesion without additional support mechanisms.

The elimination of auxiliary operations not only simplifies the workflow but also significantly reduces lead time and recurrent costs associated with the manufacturing process. This new strategy enhances flexibility, allowing for the vacuum bag to be positioned either before or after the skin lay-up, thus providing greater accessibility and adaptability to different manufacturing scenarios.

In some examples, the step of adjusting the force applied to the tow is performed dynamically based on real-time feedback to maintain a desired tow trajectory and tow position.

In a first alternative, the method further comprises the step of positioning a vacuum bag (tubular one) inside the cavity (wherein cavity or hollow means unsupported slot) of the integrated component (stringer or frame) after laying up the composite skin material, without using auxiliary mandrels.

In a second alternative, the method further comprises the step of positioning a tubular vacuum bag inside the cavity of the integrated component (stringer or frame) before laying up the composite skin material, without using auxiliary mandrels.

In preferred example, the skin is made of composite prepreg.

According to another preferred example, laying up the composite skin material comprises applying the tow with a plurality of ply orientations, wherein one of the pluralities of ply orientations is equal to 0 degrees with respect to a reference direction.

According to another preferred example, laying up the composite skin comprises continuous and cut plies in the unsupported slot (or cavity) of the integrated component. Therefore, this method allows drop-offs in the cavity of the integrated component once few plies have been laid. This means that a tow can be cut in the middle of the cavity of the integrated component (stringer/frame) although no reaction mandrel is inside the cavity.

Furthermore, the invention's applicability to both flat and curved parts, as well as its compatibility with various material formats, fiber areal weights, and ply orientations, underscores its versatility and potential impact on the industry.

The key features and some of the advantages of the present invention include:
Direct Lay-Up Over components (Stringers or Frames):
   The process involves laying up the skin material directly over components slots integrated into a male tool, without internal support. This "flying" lay-up technique eliminates the need for any auxiliary tools to support the machine pressure during tow deposition.
Reduced Operations and Costs:
   By eliminating the use of reaction mandrels and other auxiliary materials, the number of operations is significantly reduced. This results in minimized lead time, reduced process takt time, and considerable savings in recurrent costs.
Enhanced Flexibility and Efficiency:
   The process allows for the introduction and positioning of the inner tubular vacuum bags either before or after the skin lay-up, providing full accessibility and versatility. This change simplifies the workflow and reduces the need for multiple auxiliary mandrel placements.
Optimized Machine Parameters:
   The method includes adjusting the force applied to the tow by controlling the compaction pressure of the AFP machine rollers and the tow tension, particularly over unsupported stringer and frame slots. This ensures proper tow trajectory and final position without additional support.
Broad Applicability:
   The invention is applicable to both flat and curved parts, and can accommodate various material and formats , fiber areal weights, and ply orientations. It provides a competitive alternative to traditional metallic solutions in panel manufacturing.
Feasibility and Quality Assurance:
   Extensive trials have been conducted to verify the feasibility of this method. The final product quality meets the same stringent requirements as the current manufacturing processes.

Overall, this new lay-up strategy offers significant improvements in cost, time, and process efficiency for manufacturing composite panels, making it a valuable advancement in the field of aircraft production.

### Brief description of the drawings

For a better understanding of the above explanation and for the sole purpose of providing an example, some non-limiting drawings are included that schematically depict a practical embodiment.
Figure 1 shows steps of the method for manufacturing an aircraft panel according to the present invention.
Figure 2 shows elements involved in the method for manufacturing an aircraft panel according to the present invention.
Figure 3 shows a laying-up of composite layers onto an integrated omega stringer using an AFP machine having rollers.
Figure 4 shows a first plurality of composite layers having a first ply orientation.
Figure 5 shows a second group composite layers having a second ply orientation.
Figure 6 shows several groups of composite layers having different ply orientations.
Figure 7 shows several groups of composite layers having different ply orientations, wherein one of the orientations is 0°.

### Description of the detailed embodiment

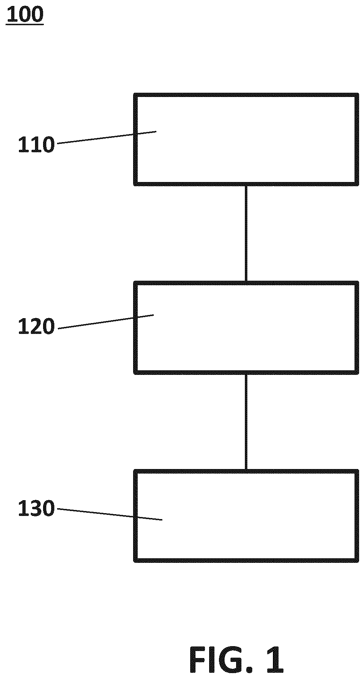

Figure 1 shows steps of the method (100) for manufacturing an aircraft panel according to the present invention.

The method (100) for manufacturing comprises the step of obtaining (110) a male tool with at least one integrated component (i.e. stringer or frame) having an unsupported slot. The male tool can be designed to integrate the stringers/frames prior to the layup process, eliminating the need for additional positioning operations for reactions cores.

The method (100) for manufacturing comprises the step of laying up (120) the composite skin directly over the unsupported slots of the integrated components with an AFP machine that provides fiber layers or fiber tape as tow deposition. During the step of laying up (120), the integrated components lack auxiliary support tools.

Conventional manufacturing process uses reaction mandrels during the layup of the skin over the stringers or frames already integrated in the tool. The proposed method avoids the use of any type of auxiliary tool, e.g. internal caul plate, reaction core, internal mandrel or any tool that supports or reacts against the AFP machine pressure when the tow is placed during the layup process of the skin by the AFP machine over the stringers/frames already integrated in the tool.

The method (100) for manufacturing comprises the step of adjusting (130) the force applied to the tow with the AFP machine during deposition over the unsupported slots to compensate the lack of auxiliary support tools.

The step of adjusting (130) the force comprises reducing the compact pressure applied with the AFP machine over the unsupported slots (e.g. reducing the pressure down to 0 Pa), at the same time the tension applied to the already placed tow in the tool is increased. Hence, this step is a combination of locking and unlocking the compaction of the AFP machine rollers in the Z axis along the tow deposition and/or tow trajectory, mainly focused over the unsupported slots or hollows of the stringer/frame where there is a lack of any auxiliary support from the tooling.

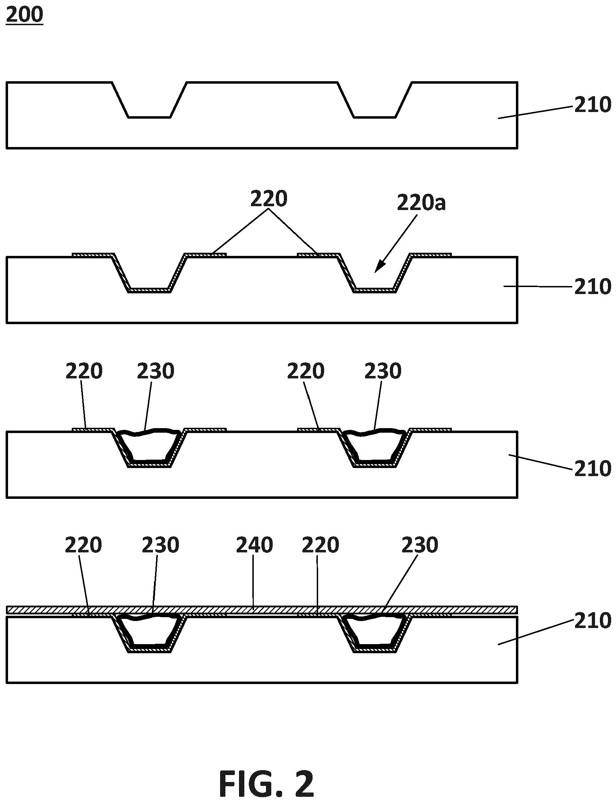

Figure 2 shows elements involved in the method for manufacturing an aircraft panel according to the present invention. Figure 2 shows the male tool (210), the integrated component (220) (being an omega stringer for this example) having unsupported slots (220a), a tubular vacuum bag (230), and finally the composite skin (240).

Firstly, the male tool (210) is designed to integrate the components (220) prior to the lay-up process, eliminating the need for additional positioning operations for reactions cores during the step (110).

Secondly, the integrated component (220) having unsupported slots (220a) are integrated onto the male tool (210) during the step (110).

Optionally, a tubular vacuum bags (230) is included into the unsupported slots (220a) with the only purpose of ensuring the form (configuration) of the integrated component during the curing cycle, not as a reaction mandrel.

Fourthly, the composite skin is laid-up directly over the unsupported slots (220a) of the integrated components (220) with the AFP process (AFP machine) that provides the tow deposition, wherein the integrated components (220) lack auxiliary support tools during step (120)

Fifthly, during the lay-up, the force applied to the tow during deposition over the unsupported slots (220a) with the AFP machine is adjusted to compensate the lack of auxiliary support tools. Particularly, the force applied to the tow comprises reducing a compaction pressure applied with the AFP machine to the tow while increasing the tow tension during deposition over the unsupported slots (220a). In preferred examples, no pressure at all is applied over the unsupported slots (220a) with the AFP machine.

This adjustment can be carried out dynamically based on real-time feedback to maintain a desired tow trajectory and tow position

Additional steps can comprise the steps of positioning a vacuum bag over the skin material after laying up (120) the composite skin material, without using auxiliary mandrels. The vacuum bag introduction and positioning can be done before the skin layup and having full accessibility without using any auxiliary mandrels or any additional elements. During the layup process, reduced compaction pressure or no compaction pressure at all may be applied to the tow with the AFP machine over the unsupported slots (220a).

Alternatively, the step of positioning a tubular vacuum bag inside the cavity over the integrated component can be carried out before laying up the composite skin material, without using auxiliary mandrels. The vacuum bag could be placed after the lay-up of the composite skin, in case it is needed, because the lay-up can be done with the slot of the component empty.

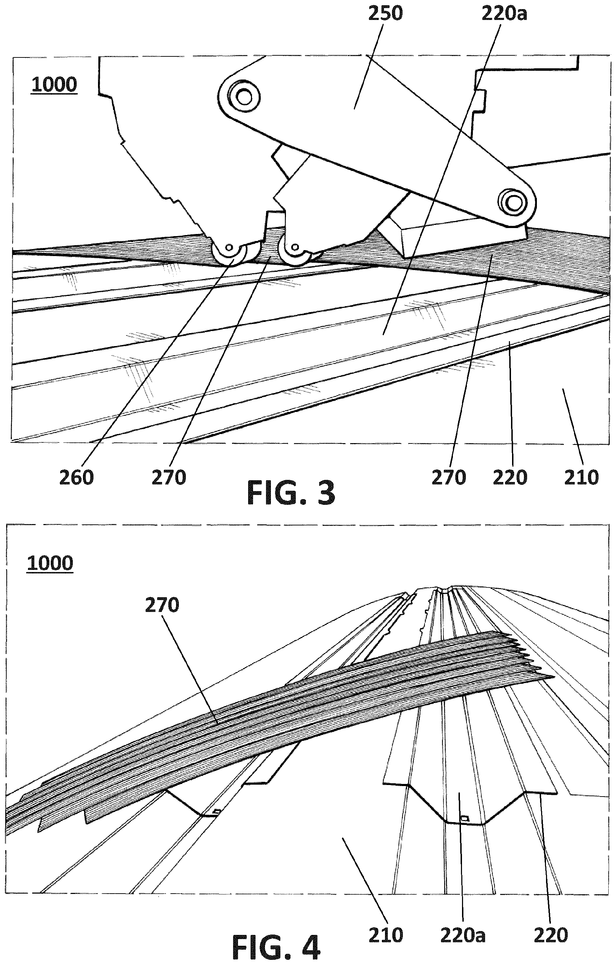

Figure 3 shows parts of the system (1000) for manufacturing an aircraft panel that comprises a composite skin (240) with an integrated component (220).

The system (1000) comprises a male tool (210) configured to integrate the components (220) with unsupported slots (220a). Figure 3 shows the AFP machine (250) having rollers (260) providing the tow (270) and configured to lay up the composite skin (240).

Figure 3 shows the AFP machine (250) depositing the tow (270) directly over the unsupported slots (220a). As shown in the figure, the omega stringers lack auxiliary support tools.

Figures 4, 5 and 6 show different ply orientation for different groups of composite layers during layup.

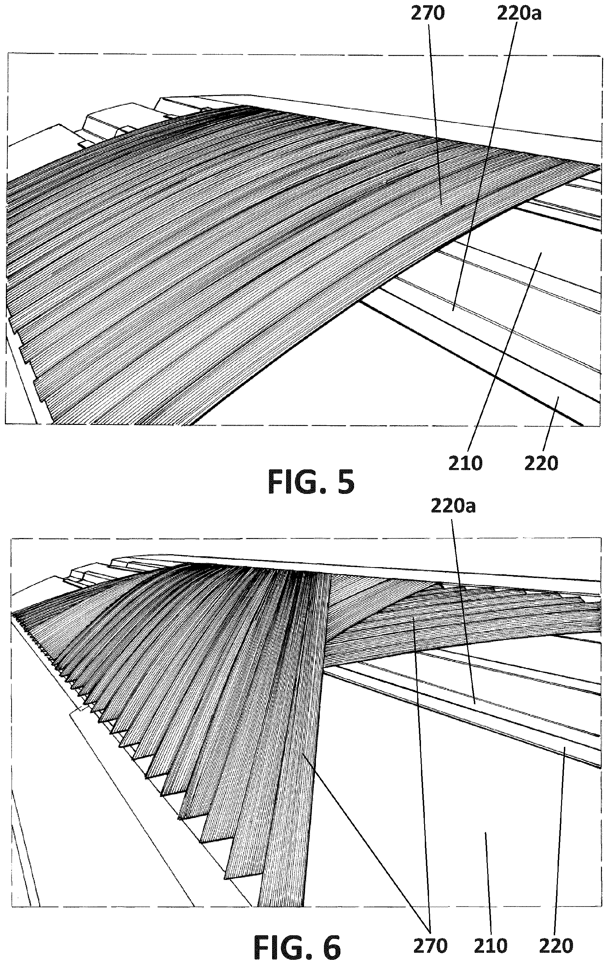

In particular, figure 4 shows a first group of composite layers or tow (270) having a first ply orientation. Figure 5 shows a second group of composite layers or tow (270) having a second ply orientation. Figure 6 shows three groups of composite layers or tow (270) each having a different ply orientation.

These previous figures show parts of the elements of the system (1000) for manufacturing an aircraft fuselage panel that comprises a composite skin (240) with integrated components (220). These figures show the male tool (210) configured to integrate the integrated component (220) with unsupported slots (220a).

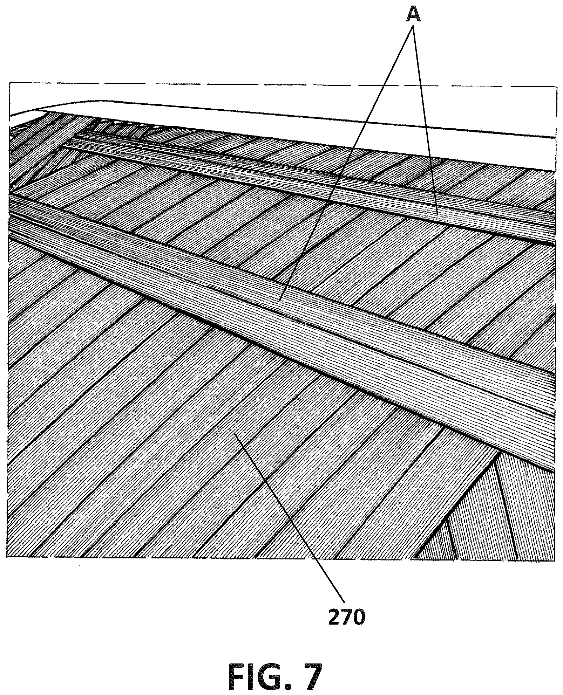

Figure 7 shows several groups of composite layers applied during the lay-up with different ply orientations and a further group of layers (A) having a ply orientation at 0°, wherein composite fibers are aligned with the reference direction, providing maximum strength and stiffness in that direction. After applied the composite layers with e.g. three or four different plies (which depends on the material), the applied laminates behave as a conventional laminate obtained with a reaction mandrel. After this, it is feasible to apply the further group of layers (A) having a ply orientation at 0° obtaining a laminate that can withstand regular (conventional) compact pressure applied by the AFP machine.

## Claims

1. A method (100) for manufacturing an aircraft panel that comprises a composite skin (240) with at least one integrated component (220) having an unsupported slot (220a), the integrated component (220) being a stringer or a frame, the method comprising:
∘ obtaining (110) a male tool with the integrated component (220) having the unsupported slot (220a);
∘ laying up (120) the composite skin (240) directly over the unsupported slot (220a) of the integrated component (220) with an automated fiber placement, AFP machine (250) that provides tow deposition, wherein the integrated component (220) lacks auxiliary support tools; and
∘ adjusting (130) the force applied to the tow with the AFP machine (250) during deposition over the unsupported slot (220a) to compensate the lack of auxiliary support tools.

2. The method according to claim 1, wherein adjusting (130) the force applied to the tow comprises reducing compaction pressure applied to the tow with the AFP machine (250) and increasing the tow tension during deposition over the unsupported slots.

3. The method according to previous claim, wherein reducing a compaction pressure applied to the tow comprises providing a compaction pressure of 0 Pa.

4. The method of claims 1 to 3, wherein adjusting (130) the force applied to the tow is performed dynamically based on real-time feedback to maintain a desired tow trajectory and tow position.

5. The method of claims 1 to 4, further comprising the step of positioning a vacuum bag over the composite skin (240) after laying up (120) the composite skin (240), without using mandrels.

6. The method of claims 1 to 5, further comprising the step of positioning a tubular vacuum bag (230) inside the unsupported slot (220a) over the integrated component (220) before laying up (120) the composite skin (240), without using mandrels.

7. The method according to any of the previous claims, wherein laying up (120) the composite skin (240) comprises applying the tow with a plurality of ply orientations, wherein one of the pluralities of ply orientations is equal to 0 degrees with respect to a reference direction.

8. The method according to any of the previous claims, wherein laying up (120) the composite skin (240) comprises continuous and cut plies in the unsupported slot (220a) of the integrated component (220).

9. An aircraft panel that comprises a composite skin (240) with integrated components (220) being stringers or frames obtained by the method according to any of claims 1 to 8.
